# EUROPÄISCHE PATENTANMELDUNG

(11) **EP 0 787 754 A2**
(43) Veröffentlichungstag der Anmeldung: **06.08.1997**
(21) Anmeldenummer: 96118883.6
(22) Anmeldetag: 26.11.1996
(51) Int. Cl.: C08G 18/80

(54) **Blockierte aliphatische Diisocyanate oder Diisocyanat-Addukte**

(30) Priorität: 31.01.1996 DE 19603389
(71) Anmelder: HÜLS AKTIENGESELLSCHAFT, 45764 Marl (DE)
(72) Erfinder: Gras, Rainer, Dr., 44879 Bochum (DE); Wolf, Elmar, Dr., 45661 Recklinghausen (DE)

(57) **Zusammenfassung**

Blockierte aliphatische Diisocyanate oder Diisocyanat-Addukte, erhältlich durch Umsetzung von aliphatischen Diisocyanaten der allgemeinen Formel
A)
   1. OCN-R-NCO
      - R:: C₄-C₁₂-Alkylen-Rest, der 1 - 3 Methyl- oder Ethylgruppen oder anstelle von 4 CH₂-Gruppen einen Rest von Cyclohexan enthalten kann,
   2. und/oder isocyanuratgruppen-, biuretgruppen-, urethangruppenhaltige Addukte von A 1,
   mit
B) sekundären Aminen, die einen Siedepunkt von 160 °C oder höher aufweisen, der allgemeinen Formel 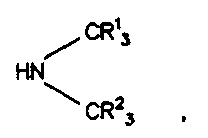 worin R¹ und R² gleiche oder verschiedene Substituenten aus der Gruppe Wasserstoff, Alkyl, Cycloalkyl und Aralkyl bedeuten oder 2 R¹, 2 R² oder R¹ und R² einen gemeinsamen Ring, der durch 1 - 4 Alkylgruppen substituiert sein kann, oder anstelle von einer CH₂-Gruppe ein Sauerstoffatom oder eine -NH-Gruppe enthalten kann, bilden können, wobei die Diisocyanate und die sterisch gehinderten sekundären Amine in solchen Mengen eingesetzt werden, daß auf ein mol Isocyanat-Gruppen 0,5 - 1 mol, vorzugsweise 0,8 - 1 mol, sekundäres Amin kommen.

## Beschreibung

Die vorliegende Erfindung betrifft neue blockierte aliphatische Diisocyanate oder Diisocyanat-Addukte sowie daraus herstellbare Polyurethanpulverlacke.

PUR-Pulver, deren stürmische Entwicklung anfangs der 70er Jahre einsetzte, bestehen zumeist aus einem ε-Caprolactam blockierten Polyisocyanat in Kombination mit Hydroxylgruppen enthaltenden Polyesterharzen. Mit dieser Kombination werden Pulverbeschichtungen erzielt, die nahezu die Verlaufseigenschaften von flüssigen Lacksystemen erreichen und in den übrigen Eigenschaften gleichwertig sind.

Zur Herstellung von witterungsbeständigen Polyurethanbeschichtungen sind aus der Vielzahl von Polyisocyanaten nur die ε-Caprolactam-Addukte des Isophorondiisocyanats (IPDI) geeignet. ε-Caprolactam blockiertes IPDI schmilzt bei 53 - 55 °C. Infolge der niedrigen Schmelztemperatur backen die aus diesem blockierten IPDI hergestellten Pulver beim Lagern zusammen. Zur Erhöhung des Schmelzpunktes wird IPDI vor der ε-Caprolactam-Blockierung einer Kettenverlängerung mit einem Polyol (NCO:OH = 2:1) "unterworfen". In der DE-OS 21 05 777 werden als Kettenverlängerungsmittel für IPDI Polyole wie Trimethylolpropan, 2.2.4-Trimethylhexandiol-1.6 und Diethylenglykol genannt; in der DE-OS 25 42 191 sind es Gemische aus di- und trifunktionellen Polyolen; in der DE-OS 31 43 060 erfolgt die Kettenverlängerung des IPDI mit aliphatischen Diaminen. In den DE-OSS 27 35 497 und 28 42 641 werden reaktive PUR-Pulver beschrieben, die dadurch gekennzeichnet sind, daß sie als Harter ein ε-Caprolactam blockiertes isocyanurathaltiges IPDI-Addukt enthalten.

Die Herstellung von PUR-Pulvern auf Basis von ε-Caprolactam blockierten aliphatischen Diisocyanaten bzw. deren isocyanuratgruppen-, biuretgruppen- und urethangruppenhaltigen Addukten war bis jetzt nicht möglich, da diese Verbindungen entweder nicht fest und daher nicht mahlbar sind oder zwar fest sind, wie dies beim ε-Caprolactam blockierten Hexamethylendiisocyanat der Fall ist, aber dafür im Gemisch mit dem Hydroxylgruppen enthaltenden Polyester mangelnde Lagerstabilität aufweisen.

Aufgabe der Erfindung war es deshalb, neue Härter für PUR-Pulverlacke auf Basis von blockierten aliphatischen Diisocyanaten oder deren Addukten bereitzustellen.

Überraschenderweise wurde gefunden, daß für PUR-Pulverlacke Härter auf Basis von aliphatischen Diisocyanaten oder deren Addukten die vorteilhaften Eigenschaften der in den oben aufgeführten DE-OSS beschriebenen Härter (auf IPDI-Basis) haben, wenn anstelle von ε-Caprolactam als Blockierungsmittel sterisch gehinderte sekundäre Amine eingesetzt werden.

Gegenstand der Erfindung sind blockierte aliphatische Diisocyanate oder Diisocyanat-Addukte, erhältlich durch Umsetzung von aliphatischen Diisocyanaten der allgemeinen Formel
A)
   1. OCN-R-NCO
      - R:: C₄-C₁₂-Alkylen-Rest, der 1 - 3 Methyl- oder Ethylgruppen oder anstelle von 4 CH₂-Gruppen einen Rest von Cyclohexan enthalten kann,
   2. und/oder isocyanuratgruppen-, biuretgruppen-, urethangruppenhaltige Addukte von A 1,
   mit
B) sekundären Aminen, die einen Siedepunkt von 160 °C oder höher aufweisen, der allgemeinen Formel 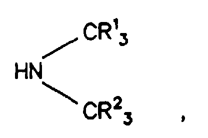 worin R¹ und R² gleiche oder verschiedene Substituenten aus der Gruppe Wasserstoff, Alkyl, Cycloalkyl und Aralkyl bedeuten oder 2 R¹, 2 R² oder R¹ und R² einen gemeinsamen Ring, der durch 1 - 4 Alkylgruppen substituiert sein kann, oder anstelle von einer CH₂-Gruppe ein Sauerstoffatom oder eine -NH-Gruppe enthalten kann, bilden können, wobei die Diisocyanate und die sterisch gehinderten sekundären Amine in solchen Mengen eingesetzt werden, daß auf ein mol Isocyanat-Gruppen 0,5 - 1 mol, vorzugsweise 0,8 - 1 mol, sekundäres (Mono)-Amin kommen.

Zur Herstellung der erfindungsgemäßen Verbindungen eignen sich nur solche sterisch gehinderten sekundären Amine, die einen Siedepunkt von mindestens 160 °C haben. So ist z. B. Diisopropylamin wegen seines niedrigen Siedepunktes zur Herstellung von PUR-Pulverhärtern nicht geeignet, da das bei der Härtung freigesetzte, leichtflüchtige Diisopropylamin zur Schaumbildung im Lackfilm führt.

Geeignete aliphatische Diisocyanate im Sinne der vorliegenden Erfindung sind Pentamethylendiisocyanat-1.5, Hexamethylendiisocyanat-1.6, Hexamethylendiisocyanat-1.5, 2-Methylpentamethylendiisocyanat-1.5, 2-Ethyl-tetramethylendiisocyanat-1.4 sowie beliebige Gemische dieser beiden Isomeren, p- und m-Hexahydroxylylendiisocyanat, 5-Methylnonamethylendiisocyanat-1.9, 1.8-Diisocyanato-2.4-dimethyl-octan und Dodecamethylendiisocyanat-1.12.

In der Regel werden zur Herstellung der erfindungsgemäßen Härter die aliphatischen Diisocyanate ohne vorherige Molekülvergrößerung mit den sekundären sterisch gehinderten Aminen umgesetzt. In manchen Fällen kann es allerdings durchaus vorteilhaft sein, das aliphatische Diisocyanat vor der Blockierung einer Umsetzung zur Molekülvergrößerung mit den in der Isocyanat-Chemie gebräuchlichen Kettenverlängerungsmitteln zu "unterwerfen", wie die für die Kettenverlängerung mit Polyolen in den DE-OSS 19 57 483, 21 05 777, 25 42 191, 30 04 876 (teilweise), für die Molekülvergrößerung der aliphatischen Diisocyanate durch Trimerisierung in den DE-OSS 28 39 133, 29 01 479, 31 51 855, und für die Molekülvergrößerung durch Biuretisierung in den DE-OSS 22 61 065 und 30 07 670 beschrieben wird.

Geeignete sekundäre Amine im Sinne der Erfindung sind beispielsweise Dicyclohexylamin, t-Butylcyclohexylamin, Di-(3.5.5-trimethyl)-cyclohexylamin, Di-cyclopentylamin, 2.6-Dimethylpiperidin, 3.5-Dimethylmorpholin, Di-(2.2.6.6-tetramethylpiperidyl)amin. Bevorzugt wird das Di-(2.2.6.6-tetramethylpiperidyl)amin zur Blockierung eingesetzt, da es beim Einbrennen überwiegend im Lackfilm verbleibt und damit zur UV-Stabilisierung der Beschichtungen beiträgt. Es können auch Gemische der genannten sekundären Amine erfindungsgemäß eingesetzt werden.

Die Umsetzung der aliphatischen Diisocyanate bzw. deren (durch Molekülvergrößerung hergestellten) Addukte mit den sekundären sterisch gehinderten Aminen kann sowohl in Lösung als auch in der Substanz durchgeführt werden. Wird lösemittelfrei gearbeitet, so wird dem auf 70 - 140 °C erhitzten Diisocyanat das sekundäre Amin so zudosiert, daß die Temperatur des Reaktionsgesisches nicht über 190 °C steigt. Nach Beendigung der Blockierungsmittelzugabe wird das Reaktionsgemisch zur Vervollständigung der Reaktion noch ca. eine Stunde in Schmelze gehalten. Die Blockierung kann, wie bereits erwähnt, auch in Lösemitteln durchgeführt werden. Als Lösemittel für diese Reaktion kommen natürlich nur solche in Frage, die mit Isocyanaten nicht reagieren, wie z. B. Ketone wie Aceton, Methylethylketon, Methylisobutylketon, Cyclopentanon, Cyclohexanon u. a. m., Aromaten wie Toluol, Nitrobenzol, cyclische Ether wie Tetrahydrofuran, sowie aprotische Lösemittel wie Dimethylformamid, Dimethylacetamid, Dimethylsulfoxid usw.

Bei den so erhältlichen erfindungsgemäßen Verbindungen handelt es sich im allgemeinen um Verbindungen des Molgewichtsbereiches 300 - 1600, vorzugsweise 350 - 1000. Sie weisen einen Schmelzbereich von 50 - 180 °C, vorzugsweise 70 - 120 °C, auf. Das mit den sekundären Aminen blockierte aliphatische Diisocyanat bzw. Diisocyanat-Addukt ist weiter durch einen Gehalt an endständig in blockierter Form vorliegenden Isocyanatgruppen (berechnet als NCO (42)) von 6 - 22 Gew.-%, vorzugsweise 8 - 17 Gew.-%, charakterisiert.

Die Produkte eignen sich insbesondere als Härter für Zerewitinoff aktive Wasserstoffatome aufweisende höherfunktionelle Verbindungen. In Kombination mit derartigen Zerewitinoff aktive H-Atome aufweisenden Verbindungen führen die Verfahrensprodukte oberhalb 120 °C, vorzugsweise 130 - 170 °C, zu zu hochwertigen Kunststoffen aushärtbaren Systemen. Das bedeutendste Anwendungsgebiet für die erfindungsgemäßen Verbindungen ist ihre Anwendung als Härter für lichtbeständige Polyurethan-Pulverbeschichtungen.

Gegenstand der vorliegenden Erfindung sind demnach auch lagerstabile, in der Hitze härtbare Polyurethan-Pulverlacke auf Basis der erfindungsgemäßen blockierten aliphatischen Diisocyanate oder Diisocyanataddukte und OH-Gruppen aufweisende Polymere der folgenden Zusammensetzung:
a) 100 Gew.-T. OH-Gruppen-haltiges Polymer
b) 10 - 90 Gew.-T. blockiertes aliphatisches Polyisocyanat oder -addukt
c) 0 - 160 Gew.-T. Pigmente
d) 0 - 200 Gew.-T. übliche Füllstoffe
e) 0 - 5 Gew.-T. Katalysator
f) 0,5 - 5 Gew.-T. Verlaufsmittel

Der Bestandteil a kann im Prinzip jedes mehr als 2 OH-Gruppen enthaltende Polymer sein, das mindestens bei 70 °C schmilzt. Hierbei handelt es sich um Polyetherpolyole, Polyesteramidpolyole, Polyurethanpolyole, hydroxylierte Acrylharze usw., deren OH-Gruppen für die Vernetzung mit den erfindungsgemäßen blockierten aliphatischen Diisocyanaten bestimmt sind. Besonders bevorzugt sind unter den zahlreichen Möglichkeiten für Hydroxylgruppen tragende Polymere im Rahmen der Erfindung Polyesterpolyole. Solche Polyesterpolyole müssen ein Molekulargewicht zwischen 1000 - 3000, vorzugsweise zwischen 1500 und 2500, und eine OH-Zahl von 30 - 240 haben. Solche Polyesterpolyole werden z. B. in den DE-OSS 19 57 483, 25 42 191, 30 04 876 und 31 43 060 beschrieben.

Um die Geliergeschwindigkeit der hitzehärtbaren Pulverlacke zu erhöhen, kann man Katalysatoren zusetzen. Als Katalysatoren verwendet man Organozinnverbindungen wie Dibutylzinndilaurat, Sn(II)-octoat, Dibutylzinnmaleat usw. Die Menge an zugesetztem Katalysator beträgt 0,1 - 5 Gew.-Teile auf 100 Gew.-Teile des Hydroxylgruppen tragenden Polyesters.

Die Isocyanatkomponente wird für die Herstellung von PUR-Pulverlacken mit dem geeigneten hydroxylgruppenhaltigen Polymeren und gegebenenfalls Katalysatoren sowie Pigmenten und üblichen Hilfsmitteln, wie Füllstoffen und Verlaufsmitteln, z. B. Siliconöl, Acrylatharzen, gemischt und in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, elektrostatisches Wirbelsintern, erfolgen. Nach dem Pulverauftrag werden die beschichteten Werkstücke zur Aushärtung 60 bis 4 Minuten auf eine Temperatur von 150 bis 220 °C, vorzugsweise 30 bis 6 Minuten bei 160 - 200 °C, erhitzt.

Die erfindungsgemäßen PUR-Pulverlacke zeichnen sich durch hervorragende Witterungs- und sehr gute Farbbeständigkeit aus.

### A Herstellung der blockierten Polyisocyanate

### Beispiel 1

Zu 210 Gew.-T. 2.2.4(2.4.4)-Trimethylhexamethylendiisocyanat (TMDI) wurden bei 100 °C 362 Gew.-T. Dicyclohexylamin so zugetropft, daß die Temperatur des Reaktionsgemisches nicht über 120 °C stieg. Nach erfolgter Dicyclohexylaminzugabe wurde zur Vervollständigung der Reaktion noch ca. 1 Stunde bei 120 °C weitererhitzt. Das so hergestellte Reaktionsprodukt hatte einen Schmelzbereich von 76 - 84 °C und einen Gehalt an blockiertem NCO von 14,6 %; der Amingehalt lag unter 0,1 %.

### Beispiel 2

Zu 210 Gew.-T. TMDI wurden bei 100 °C 530 Gew.-T. Di-(3.5.5-trimethyl)cyclohexylamin innerhalb von ca. 3 Stunden zugetropft. Nach Beendigung der Aminzugabe wurde das Reaktionsgemisch noch 1 Stunde bei 110 °C weitererhitzt. Das Reaktionsgemisch hatte einen Schmelzbereich von 63 - 70 °C und einen Gehalt an blockiertem NCO von 11,3 %.

### Beispiel 3

Zu 168 Gew.-T. 2-Methylpentamethylendiisocyanat wurden bei 100 °C 530 Gew.-T. Di-(3.5.5-trimethyl)-cyclohexylamin so zugetropft, daß die Temperatur nicht über 120 °C stieg. Nach Beendigung der Aminzugabe wurde das Reaktionsgemisch noch ca. 1 Stunde weitererhitzt. Das Reaktionsprodukt hatte einen Schmelzbereich von 56 - 65 °C und einen Gehalt an blockiertem NCO von 12,0 %.

### Beispiel 4

In analoger Weise zu dem im Beispiel 3 beschriebenen Verfahren wurden 168 Gew.-T. 2-Methylpentamethylendiisocyanat mit 226 Gew.-T. 2.6-Dimethylpiperidin umgesetzt. Das Reaktionsprodukt hatte einen Schmelzbereich von 48 - 53 °C und einen Gehalt an blockiertem NCO von 21,3 %.

### Beispiel 5

Zu 168 Gew.-T. Hexamethylendiisocyanat wurden bei 110 °C 181 Gew.-T. Dicyclohexylamin und 265 Gew.-T. Di-(3.5.5-trimethyl)cyclohexylamin so zugetropft, daß die Temperatur des Reaktionsgemisches nicht über 120 °C stieg. Nach Beendigung der Aminzugabe wurde noch ca. 1 Stunde bei 120 °C weitererhitzt. Das Reaktionsprodukt hatte einen Schmelzbereich von 78 - 84 °C und einen Gehalt an blockiertem NCO von 13,6 %.

### Beispiel 6

168 Gew.-T. Hexamethylendiisocyanat wurden in analoger Weise zu dem im Beispiel 5 beschriebenen Verfahren mit 530 Gew.-T. Di-(3.5.5-trimethyl)cyclohexylamin umgesetzt. Das Reaktionsprodukt hatte einen Schmelzbereich von 60 - 68 °C und einen Gehalt an blockiertem NCO von 12.0 %.

### Beispiel 7

In analoger Weise zu dem im Beispiel 5 beschriebenen Verfahren wurden 168 Gew.-T. Hexamethylendiisocyanat mit 226 Gew.-T. 2.6-Dimethylpiperidin umgesetzt. Das Reaktionsprodukt hatte einen Schmelzbereich von 51 - 59 °C und einen Gehalt an blockiertem NCO von 21,3 %.

### Beispiel 8

Zu 168 Gew.-T. 2-Methylpentamethylendiisocyanat wurden bei 130 °C 362 Gew.-T. Dicyclohexylamin so zugetropft, daß während der Dicyclohexylaminzugabe die Temperatur des Reaktionsgemisches auf 190 °C anstieg. Das Reaktionsgemisch wurde ca. 5 Minuten bei dieser Temperatur gehalten und anschließend auf Raumtemperatur abgekühlt. Das Reaktionsprodukt hatte einen Schmelzbereich von 170 - 180 °C und einen Gehalt an blockiertem NCO von 15,8 %; der Amingehalt lag unter 0,1 %.

### Beispiel 9

In analoger Weise zu Beispiel 8 wurden 224 Gew.-T. eines Isomerengemisches aus ca. 90 % 5-Methylnonamethylendiisocyanat und 10 % 2.4-Dimethyloctamethylendiisocyanat mit 362 Gew.-T. Dicyclohexylamin umgesetzt. Das Reaktionsprodukt hatte einen Schmelzbereich von 156 - 164 °C und einen Gehalt an blockiertem NCO von 14,3 %; der Amingehalt lag unter 0,1 %.

### Beispiel 10

Zu 224 Gew.-T. eines Isomerengemisches aus ca. 90 % 5-Methylnonamethylendiisocyanat und 10 % 2.4-Dimethyloctamethylendiisocyanat wurden bei 100 °C 530 Gew.-T. Di-(3.5.5-trimethyl)-cyclohexylamin so zugetropft, daß die Temperatur des Reaktionsgemisches nicht über 120 °C stieg. Nach Beendigung der Aminzugabe wurde das Reaktionsgemisch zur Vervollständigung der Reaktion noch ca. 0,5 h bei 120 °C weitererhitzt. Das so hergestellte Reaktionsprodukt hatte einen Schmelzbereich von 54 - 61 °C und einen Gehalt an blockiertem NCO von 11,1 %.

### Beispiel 11

Zu 186,6 Gew.-T. eines im Handel unter der Bezeichnung DESMODUR N 3200 erhältlichen Biurets des Hexamethylendiisocyanats wurden bei 110 °C unter intensivem Rühren und Stickstoffabdeckung 181 Gew.-T. Dicyclohexylamin so zugetropft, daß die Temperatur des Reaktionsgemisches nicht über 130 °C stieg. Nach Beendigung der Dicyclohexylaminzugabe wurde das Reaktionsgemisch zur Vervollständigung der Reaktion noch ca. 0,5 h bei 130 °C weitererhitzt. Das so hergestellte Reaktionsprodukt hatte einen Schmelzbereich von 91 - 95 °C und einen Gehalt an blockiertem NCO von 11,5 %; der basische Amingehalt lag unter 0,1 %.

### Beispiel 12

240 Gew.-T. eines nach der Lehre der DE-OS 27 12 931, Beispiel 10, hergestellten Isocyanatoisocyanurats des 2.2.4(2.4.4)-Trimethylhexamethylendiisocyanats mit einem NCO-Gehalt von 17,5 % wurden mit 181 Gew.-T. Dicyclohexylamin unter den im Beispiel 11 beschriebenen Reaktionsbedingungen zur Reaktion gebracht. Das Reaktionsprodukt hatte einen Schmelzbereich von 107 - 112 °C und einen Gehalt an blockiertem NCO von 9,9 %.

### Beispiel 13

212,1 Gew.-T. eines gemäß der Lehre der DE-OS 31 51 855, Beispiel 1, aus 2-Methylpentamethylendiisocyanat hergestellten Isocyanatoisocyanurat mit einem NCO-Gehalt von 19,8 % wurden mit 181 Gew.-T. Dicyclohexylamin unter den im Beispiel 11 beschriebenen Reaktionsbedingungen umgesetzt. Der Schmelzbereich des Reaktionsproduktes lag bei 99 - 103 °C, der Gehalt von blockiertem NCO betrug 10,6 %.

### Beispiel 14

190,9 Gew.-T. eines im Handel unter der Bezeichnung DESMODUR N 3300 erhältlichen Isocyanurats des Hexamethylendiisocyanats wurden mit 181 Gew.-T. Dicyclohexylamin unter den im Beispiel 11 beschriebenen Reaktionsbedingungen umgesetzt. Das Reaktionsprodukt hatte einen Schmelzbereich von 95 - 98 °C und einen Gehalt an blockiertem NCO von 11,2 %; der basische N-Gehalt lag unter 0,1 %.

### Beispiel 15

195,3 Gew.-T. eines Reaktionsproduktes aus 4 Molen 2.2.4-Trimethylhexamethylendiisocyanat und 1 Mol Trimethylolpropan mit einem NCO-Gehalt von 21,5 % wurden unter den im Beispiel 11 angegebenen Reaktionsbedingungen mit 181 Gew.-T. Dicyclohexylamin umgesetzt. Das Reaktionsprodukt hatte einen Schmelzbereich von 84 - 87 °C und einen Gehalt an blockiertem NCO von 11,0 %.

### Beispiel 16

Zu 500 Gew.-T. Hexamethylendiisocyanat wurden bei 80 °C 0,5 Gew.-T. des im Handel erhältlichen quaternären Ammoniumsalzes Dabco® TMR gegeben. Die Temperatur des Reaktionsgemisches stieg innerhalb von ca. 5 Minuten auf 145 °C; der NCO-Gehalt fiel dabei von 50 auf 36,5 %. Danach wurde das Reaktionsgemisch auf 80 °C abgekühlt und unter den im Beispiel 11 beschriebenen Reaktionsbedingungen mit 786 Gew.-T. Dicyclohexylamin umgesetzt. Das Reaktionsprodukt hatte einen Schmelzbereich von 55 - 63 °C und einen Gehalt an blockiertem NCO von 14,1 %.

### Beispiel 17

190,9 Gew.-T. eines im Handel unter der Bezeichnung DESMODUR N 3200 erhältlichen Biurets des Hexamethylendiisocyanats wurden mit 135,7 Gew.-T. Dicyclohexylamin unter den im Beispiel 11 beschriebenen Reaktionsbedingungen umgesetzt. Das Reaktionsprodukt hatte einen Schmelzbereich von 85 - 93 °C und einen Gehalt an blockiertem NCO von 9,6 %, an freiem NCO von 3,4 %.

### Beispiel 18

186,6 Gew.-T. eines im Handel unter der Bezeichnung DESMODUR® N 3200 erhältlichen Biurets des Hexamethylendiisocyanats wurden mit 144,8 Gew.-T. Dicyclohexylamin unter den im Beispiel 11 beschriebenen Reaktionsbedingungen umgesetzt. Das Reaktionsprodukt hatte einen Schmelzbereich von 85 - 89 °C und einen Gehalt an blockiertem NCO von 10,1 %, an freiem NCO von 2,5 %.

### Beispiel 19

210 Gew.-T. Trimethylhexamethylendiisocyanat wurden mit 326 Gew.-T. Dicyclohexylamin unter den im Beispiel 11 beschriebenen Reaktionsbedingungen umgesetzt. Das Reaktionsprodukt hatte einen Schmelzbereich von 59 - 63 °C und einen blockierten NCO-Gehalt von 14,1 % und einen freien NCO-Gehalt von 1,5 %.

### Beispiel 20

Bei der Blockierung mit Di-(2.2.6.6-tetramethylpiperidyl)-amin hat es sich als zweckmäßig erwiesen, in umgekehrter Reihenfolge (zu den Beispielen 1 - 19) vorzugehen.

295 Gew.-T. Di-(2.2.6.6-tetramethylpiperidyl)-amin wurden auf 120 °C erhitzt. Unter intensivem Rühren wurden 84 Gew.-T. Hexamethylendiisocyanat so zugetropft, daß die Temperatur der Reaktionsmischung nicht über 130 °C stieg. Nach Beendigung der Hexamethylendiisocyanatzugabe wurde das Reaktionsprodukt noch ca. 1 h bei 120 °C erhitzt.

Der Schmelzbereich des Reaktionsprodukts lag bei 90 - 97 °C; der Gehalt an blockiertem NCO betrug 11 %; der Amingehalt betrug 5,2 mmol/g.

### Beispiel 21

In Analogie zum Beispiel 20 wurden 295 Gew.-T. Di-(2.2.6.6-tetramethylpiperidyl)-amin mit 193 Gew.-T. des Isocyanurats des Hexamethylendiisocyanats (Desmodur N 3300) umgesetzt.

Das Reaktionsprodukt hatte folgende Kenndaten:
- Schmelzbereich °C:: 104 - 110
- % NCO (blockiert):: 8,6
- NH₂ mmol/g :: 4,1

### B Polyolkomponente

### Allgemeine Herstellungsvorschrift

Die Ausgangskomponenten - Terephthalsäure (TS), Dimethylterephthalat (DMT), Hexandiol-1.6 (HD), Neopentylglykol (NPG), 1.4-Dimethylolcyclohexan (DMC) und Trimethylolpropan (TMP) - werden in einen Reaktor gegeben und mit Hilfe eines Ölbades erwärmt. Nachdem die Stoffe zum größten Teil aufgeschmolzen sind, werden bei einer Temperatur von 160 °C 0,05 Gew.-% Di-n-butylzinnoxid als Katalysator zugesetzt. Die erste Methanolabspaltung tritt bei einer Temperatur von ca. 170 °C auf. Innerhalb 6 bis 8 Stunden wird die Temperatur auf 220 bis 230 °C erhöht und innerhalb weiterer 12 bis 15 Stunden die Reaktion zu Ende geführt. Der Polyester wird auf 200 °C abgekühlt und durch Anlegen von Vakuum (1 mm Hg) innerhalb 30 bis 45 Minuten weitgehend von flüchtigen Anteilen befreit. Während der gesamten Reaktionszeit wird das Sumpfprodukt gerührt und ein schwacher N₂-Strom durch das Reaktionsgemisch geleitet.

Folgende Tabelle gibt Polyesterzusammensetzungen und die entsprechenden physikalischen und chemischen Kenndaten wieder.

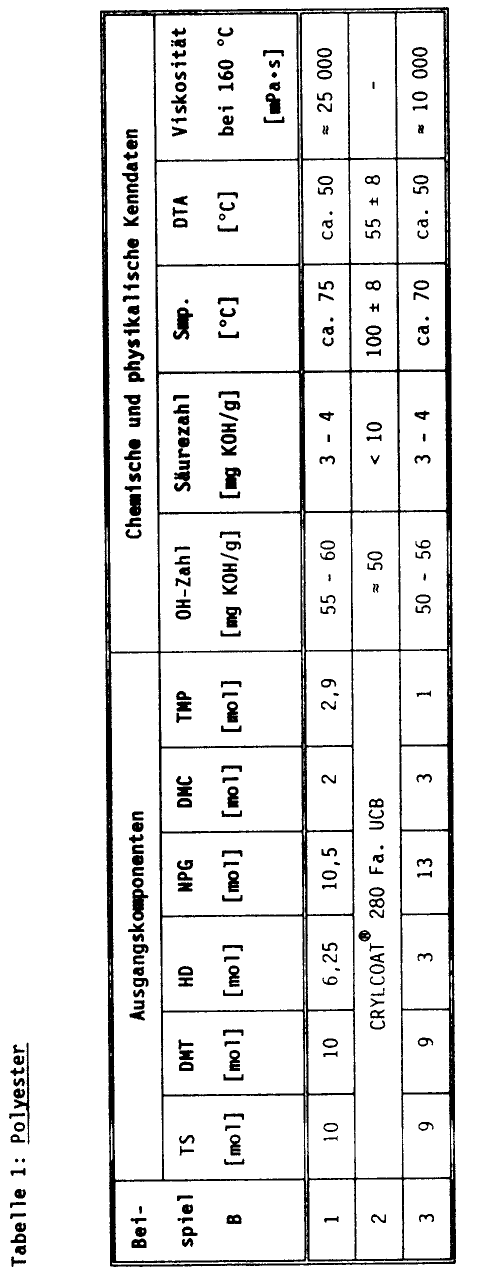

### C Polyurethan-Pulverlacke

### Allgemeine Herstellungsvorschrift

Die gemahlenen Produkte - Diisocyanat, Polyester und Verlaufsmittel-Masterbatch - werden, gegebenenfalls mit dem Weißpigment und gegebenenfalls Füllstoffen, in einem Kollergang innig vermischt und anschließend im Extruder bei 80 bis 110 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, gegebenenfalls vorbehandelte, Eisenbleche appliziert und in einem Umlufttrockenschrank bei Temperaturen zwischen 150 und 180 °C zwischen 35 und 10 Minuten eingebrannt.

### Verlaufsmittel-Masterbatch

Es werden 10 Gew.-% des Verlaufsmittels - ein handelsübliches Copolymeres von Butylacrylat und 2-Ethylhexylacrylat - in dem entsprechenden Polyester in der Schmelze homogenisiert und nach dem Erstarren zerkleinert.

Die Abkürzungen in den folgenden Tabellen bedeuten:
- SD: = Schichtdicke in µm
- ET: = Tiefung nach Erichsen in mm (DIN 53 156)
- GS: = Gitterschnittprüfung (DIN 53 151)
- GG 60 °∢: = Messung des Glanzes nach Gardner (ASTM-D 523)
- Imp. rev.: = Impact reverse in g·m

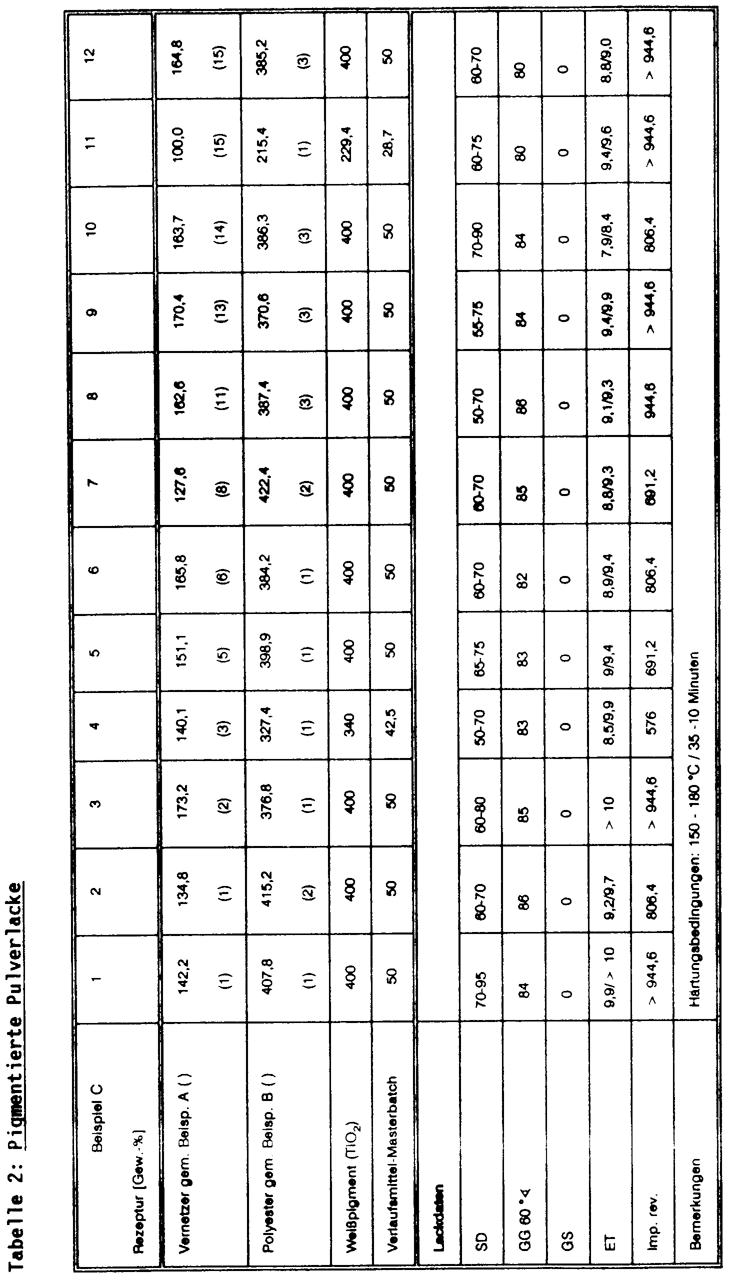

## Patentansprüche

1. Blockierte aliphatische Diisocyanate oder Diisocyanat-Addukte, erhältlich durch Umsetzung von aliphatischen Diisocyanaten der allgemeinen Formel
A)
1. OCN-R-NCO
R: C₄-C₁₂-Alkylen-Rest, der 1 - 3 Methyl- oder Ethylgruppen oder anstelle von 4 CH₂-Gruppen einen Rest von Cyclohexan enthalten kann,
2. und/oder isocyanuratgruppen-, biuretgruppen-, urethangruppenhaltige Addukte von A 1,
mit
B) sekundären Aminen, die einen Siedepunkt von 160 °C oder höher aufweisen, der allgemeinen Formel 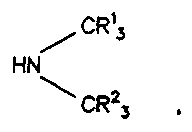 worin R¹ und R² gleiche oder verschiedene Substituenten aus der Gruppe Wasserstoff, Alkyl, Cycloalkyl und Aralkyl bedeuten oder 2 R¹, 2 R² oder R¹ und R² einen gemeinsamen Ring, der durch 1 - 4 Alkylgruppen substituiert sein kann, oder anstelle von einer CH₂-Gruppe ein Sauerstoffatom oder eine -NH-Gruppe enthalten kann, bilden können, wobei die Diisocyanate und die sterisch gehinderten sekundären Amine in solchen Mengen eingesetzt werden, daß auf ein mol Isocyanat-Gruppen 0,5 - 1 mol sekundäres Amin kommen.

2. Blockierte aliphatische Diisocyanate nach Anspruch 1,
dadurch gekennzeichnet,
daß auf ein mol Isocyanat-Gruppen 0,8 - 1 mol sekundäres Amin kommen.

3. Blockierte aliphatische Diisocyanate nach den Ansprüchen 1 bis 2,
dadurch gekennzeichnet,
daß Diisocyanate ausgewählt aus der Gruppe Pentamethylendiisocyanat, Hexamethylendiisocyanat-1.6, Hexamethylendiisocyanat-1.5, 2-Methylpentamethylendiisocyanat-1.5, 2-Ethyl-tetramethylendiisocyanat-1.4 sowie beliebige Gemische dieser beiden Isomeren, p- und m-Hexahydroxylylendiisocyanat, 5-Methylnonamethylendiisocyanat, 1.8-Diisocyanato-2.4-dimethyl-octan und Dodecamethylendiisocyanat, enthalten sind.

4. Blockierte aliphatische Diisocyanate nach den Ansprüchen 1 bis 3,
dadurch gekennzeichnet,
daß sekundäre Amine ausgewählt aus der Gruppe Dicyclohexylamin, t-Butylcyclohexylamin, Di-(3.5.5-trimethyl)-cyclohexylamin, Di-cyclopentylamin, 2.6-Dimethylpiperidin, 3.5-Dimethylmarpholin, Di-(2.2.6.6-tetramethylpiperidyl)amin, enthalten sind.

5. Blockierte aliphatische Diisocyanate nach den Ansprüchen 1 bis 4,
dadurch gekennzeichnet,
daß als Amin Di-(2.2.6.6-tetramethylpiperidyl)amin enthalten ist.

6. Blockierte aliphatische Diisocyanate nach den Ansprüchen 1 bis 5,
dadurch gekennzeichnet,
daß ein vor der Blockierung kettenverlängertes Diisocyanat enthalten ist.

7. Blockierte aliphatische Diisocyanate nach den Ansprüchen 1 bis 6,
dadurch gekennzeichnet,
daß sie ein Molgewicht von 300 bis 1 600 und einen Schmelzbereich von 50 bis 180 °C aufweisen.

8. Blockierte aliphatische Diisocyanate nach den Ansprüchen 1 bis 7,
dadurch gekennzeichnet,
daß sie einen Gehalt an blockierten endständigen NCO-Gruppen von 6 bis 22 Gew.-% aufweisen.

9. Lagerstabile, in der Hitze härtbare Polyurethan-Pulverlacke auf Basis der erfindungsgemäßen blockierten aliphatischen Diisocyanate oder Diisocyanataddukte und OH-Gruppen aufweisende Polymere der folgenden Zusammensetzung:
a) 100 Gew.-T. OH-Gruppen-haltiges Polymer
b) 10 - 90 Gew.-T. blockiertes aliphatisches Polyisocyanat oder -addukt
c) 0 - 160 Gew.-T. Pigmente
d) 0 - 200 Gew.-T. übliche Füllstoffe
e) 0 - 5 Gew.-T. Katalysator
f) 0,5 - 5 Gew.-T. Verlaufsmittel
